# EUROPEAN PATENT APPLICATION

(11) **EP 4 258 023 A1**
(43) Date of publication of application: **11.10.2023**
(21) Application number: 23166842.7
(22) Date of filing: 05.04.2023
(51) Int. Cl.: G01S 17/89, G06T 7/73

(54) **CAPTURING THREE-DIMENSIONAL REPRESENTATION OF SURROUNDINGS USING MOBILE DEVICE**

(30) Priority: 08.04.2022 US 202263328914 P
(71) Applicant: Faro Technologies, Inc., Lake Mary, FL 32746-6204 (US)
(72) Inventor: WAHEED, Mufassar, 70825 Korntal-Münchingen (DE); BRENNER, Mark, 70825 Korntal-Münchingen (DE); WOLKE, Matthias, 70825 Korntal-Münchingen (DE); FRANK, Aleksej, 70825 Korntal-Münchingen (DE)
(74) Representative: McNamara, Kathryn

(57) **Abstract**

A mobile three-dimensional (3D) measuring system includes a 3D measuring device comprising a first sensor and a second sensor. The 3D measuring system further includes a computing system coupled with the 3D measuring device. A computing device is coupled with the computing system. The 3D measuring device continuously transmits a first data from the first sensor, and a second data from the second sensor to the computing system as it is moved in an environment. The computing system generates a 3D point cloud representing the environment. The computing system generates a 2D projection corresponding to the 3D point cloud. The computing device displays the 2D projection as a live feedback of a movement of the 3D measuring device.

## Description

### CROSS-REFERENCE TO RELATED APPLICATIONS

The present application claims the benefit of, and priority to, United States Provisional Application 63/328,914 filed on April 8, 2022, the contents of which are incorporated by reference herein.

### BACKGROUND

The present disclosure relates to a system and method which can facilitate measuring, capturing, and storing a three-dimensional (3D) representation of a surrounding environment.

The subject matter disclosed herein relates to a 3D laser scanner, which can be a time-of-flight (TOF) or a phase shift coordinate measurement device. A TOF laser scanner of steers a beam of light to a non-cooperative target, such as a diffusely scattering surface of an object. A distance meter in the device measures a distance to the object, and angular encoders measure the angles of the emitted light. The measured distance and angles enable a processor in the device to determine the 3D coordinates of the target. A TOF laser scanner (or simply TOF scanner) is a scanner in which the distance to a target point is determined based on the speed of light in the air between the scanner and a target point. Phase shift laser scanners determines the distance to the object by the phase shift between the outgoing and returning signal (i.e. calculating the "shift" or "displacement" of the reflective wave compared to the outgoing wave).

Laser scanners are typically used for scanning closed or open spaces such as interior areas of buildings, industrial installations, and tunnels. They may be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., azimuth and a zenith angle), and optionally a gray-scale value. This raw scan data is collected, stored, and sent to a processor or processors to generate a 3D image representing the scanned area or object.

Generating an image requires at least three values for each data point. These three values may include the distance and two angles or may be transformed values, such as the x, y, z coordinates. In an embodiment, an image is also based on a fourth gray-scale value, which is a value related to the irradiance of scattered light returning to the scanner.

Most scanners direct the beam of light within the measurement volume by steering the light with a beam steering mechanism. The beam steering mechanism includes a first motor that steers the beam of light about a first axis by a first angle that is measured by a first angular encoder (or other angle transducers). The beam steering mechanism also includes a second motor that steers the beam of light about a second axis by a second angle that is measured by a second angular encoder (or other angle transducers).

Many contemporary laser scanners include a camera mounted on the laser scanner for gathering camera digital images of the environment and for presenting the digital camera images to an operator of the laser scanner. By viewing the camera images, the operator of the scanner can determine the field of view of the measured volume and adjust settings on the laser scanner to measure over a larger or smaller region of space. In addition, the camera's digital images may be transmitted to a processor to add color to the scanner image. To generate a color scanner image, at least three positional coordinates (such as x, y, z) and three color values (such as red, green, blue "RGB") are collected for each data point.

A 3D image of a scene may require multiple scans from different registration stationary positions. The overlapping scans are registered in a joint coordinate system, for example, as described in U.S. Published Patent Application No. 2012/0069352 (`352), the contents of which are incorporated herein by reference. Such registration is performed by matching targets in overlapping regions of the multiple scans. The targets may be artificial targets such as spheres or checkerboards, or they may be natural features such as corners or edges of walls. Some registration procedures involve relatively time-consuming manual procedures such as identifying by a user each target and matching the targets obtained by the scanner in each of the different registration positions. Some registration procedures also require establishing an external "control network" of registration targets measured by an external device such as a total station. The registration method disclosed in `352 eliminates the need for user matching of registration targets and establishing a control network.

A laser scanner is usually mounted on a tripod or instrument stand while measuring the 3D coordinates of its surroundings. An operator is required to move the tripod from location to location as measurements are taken. In many cases, post-processing is required to properly register the 3D coordinate data. The operational and post-processing steps can be time-consuming.

Accordingly, while existing 3D scanners are suitable for their intended purposes, there is a need for apparatus and methods providing greater efficiency in 3D measurement according to certain features of embodiments of the present invention.

### BRIEF DESCRIPTION

According to one or more aspcts, mobile three-dimensional (3D) measuring system includes a 3D measuring device comprising a first sensor and a second sensor. The mobile three-dimensional (3D) measuring system further includes. The mobile three-dimensional (3D) measuring system further includes a computing system coupled with the 3D measuring device. The mobile three-dimensional (3D) measuring system further includes a computing device coupled with the computing system. The 3D measuring device continuously transmits a first captured data from the first sensor, and a second captured data from the second sensor to the computing system as the 3D measuring device is moved in an environment. The computing system generates a 3D point cloud representing the environment based on the first captured data and the second captured data, and stores the 3D point cloud. The computing system generates a 2D projection corresponding to the 3D point cloud based on the first captured data and the second captured data. The computing device displays the 2D projection as a live feedback of a movement of the 3D measuring device.

In one or more aspects, the 3D measuring device is a laser scanner.

In one or more aspects, the 3D measuring device is portable.

In one or more aspects, the first sensor and the second sensor are from a group comprising a two-dimensional (2D) scanner, a 3D scanner that directs light in a horizontal plane, a 2D camera, a 3D depth camera, a lidar, and an ultrasound sensor.

In one or more aspects, the 3D measuring device is further configured for wireless communication with the computing system.

In one or more aspects, the 2D projection is displayed at a first map tile level, and in response to zooming in to a portion of the 2D projection, a second map tile level is displayed.

In one or more aspects, generating the 3D point cloud comprises transforming the first captured data and the second captured data according to a calibration mapping between a first coordinate system of the first sensor and a second coordinate system of the second sensor.

In one or more aspects, generating the 3D point cloud comprises synchronizing timing of the first sensor and the second sensor.

According to one or more aspects, a system includes a memory device, and one or more processing units coupled with the memory device. The one or more processing units are configured to perform a method. The method includes receiving, from a 3D measuring device comprising a first sensor and a second sensor, a first captured data from the first sensor, and a second captured data from the second sensor, the 3D measuring device capturing data from an environment. The method further includes generating a 3D point cloud representing the environment based on the first captured data and the second captured data, and storing the 3D point cloud. The method further includes generating a 2D projection corresponding to the 3D point cloud based on the first captured data and the second captured data. The method further includes transmitting the 2D projection for display as live feedback of a movement of the 3D measuring device.

In one or more aspects, the 2D projection is displayed as live feedback on the 3D measuring device.

In one or more aspects, the 2D projection is displayed as live feedback on a computing device coupled with the system.

In one or more aspects, the method is performed in real-time as the 3D measuring device is moved in an environment.

In one or more aspects, the 3D measuring device is a laser scanner.

In one or more aspects, the first sensor and the second sensor are from a group comprising a two-dimensional (2D) scanner, a 3D scanner that directs light in a horizontal plane, a 2D camera, a 3D depth camera, a LIDAR, and an ultrasound sensor.

In one or more aspects, the 2D projection is displayed at a first map tile level, and in response to zooming in to a portion of the 2D projection, a second map tile level is displayed.

In one or more aspects, generating the 3D point cloud comprises transforming the first captured data and the second captured data according to a calibration mapping between a first coordinate system of the first sensor and a second coordinate system of the second sensor.

In one or more aspects, generating the 3D point cloud comprises synchronizing timing of the first sensor and the second sensor.

According to one or more aspects, a computer-implemented method includes receiving, from a 3D measuring device comprising a sensor, a captured data from the sensor, the 3D measuring device capturing data from an environment. The method further includes generating a 3D point cloud representing the environment based on the captured data, and storing the 3D point cloud. The method further includes generating a 2D projection corresponding to the 3D point cloud based on the captured data. The method further includes transmitting the 2D projection for display as live feedback of a movement of the 3D measuring device.

In one or more aspects, the 2D projection is displayed as live feedback on the 3D measuring device, and/or a computing device.

In one or more aspects, the sensor is from a group comprising a two-dimensional (2D) scanner, a 3D scanner that directs light in a horizontal plane, a 2D camera, a 3D depth camera, a LIDAR, and an ultrasound sensor.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 depicts a scanning system for capturing measurements in an environment according to one or more aspects.
FIG. 2 depicts a block diagram of a structure of the distributed processing performed by a scanning system to generate a map according to one or more aspects.
FIG. 3 depicts an example point cloud.
FIG. 4 depicts a flowchart of a method for generating a map of a surrounding environment as a measurement device is transported in a surrounding environment and provides, as feedback, a real-time preview of the map that is being generated according to one or more aspects.
FIG. 5 depicts an example scenario of calibrating two lidar sensors.
FIG. 6 depicts point cloud generation according to one or more aspects of the technical solutions described herein.
FIG. 7 depicts a 2D image that is generated by the projection according to one or more examples.
FIG. 8 depicts generating map tiles corresponding to the map 130 according to one or more aspects of the technical solutions herein.
FIG. 9 depicts an example measurement device according to one or more aspects.
FIGS. 10, 11, 12A, and 12B depict a handheld 3D imager according to one or more aspects.
FIG. 13 depicts a mobile scanning platform according to one or more aspects.
FIGS. 14, 15, and 16 depict a laser scanner for optically scanning and measuring the environment surrounding the laser scanner.
FIG. 17 depicts elements of a laser scanner from FIGS. 14, 15, and 16.
FIG. 18 depicts a computing system that can be used to implement one or more aspects of the technical solutions described herein.

The detailed description explains embodiments of the invention, together with advantages and features, by way of example with reference to the drawings.

### DETAILED DESCRIPTION

Aspects of the technical solutions described herein provide a system, a device, or an apparatus that includes a mobile 3D scanner that can be carried, for example, as a handheld device that facilitates measuring, capturing, and storing a three-dimensional (3D) representation of a surrounding environment.

Aspects of the technical solutions address the technical challenge and need to capture a location in 3D as fast as possible. Scanning with existing 3D scanning systems can take a long time. A cause for such delay includes that multiple stationary scans have to be taken, which are then "registered" with each other using overlapping portions. Presently available solutions typically use landmarks (artificial or natural) to recognize the overlap for such registration. Further, current 3D scanning systems are fixed to a floor/level and cannot be easily used for capturing environments/situations in which multiple levels/floors (e.g., an office building, multistory house, etc.).

Another technical challenge with existing 3D scanning systems is that the time duration required for local calculations for processing captured measurements can be long (beyond a predetermined threshold duration, such as 10 microseconds, 1 second, or any other duration). Aspects of the technical solutions described herein address such technical challenges. In some aspects, computationally expensive operations are performed remotely, for example, in "the cloud." The remotely performed operations process the recorded scans to generate a point cloud that provides the 3D digital representation of the surroundings. Aspects of the technical solutions described herein further facilitate updating the mapping between one or more captured sets of geospatial data.

As used herein, unless explicitly indicated otherwise, "mobile mapping" is the process of measuring and collecting geospatial data by a mobile 3D scanning system. The 3D scanning system, according to one or more aspects of the technical solutions described herein, can be a backpack, a trolley, a handheld device, an autonomous robot, or any other mobile form. The 3D scanning system uses remote sensing systems like lidar cameras in combination with inertial and navigation sensors, e.g., an inertial measurement unit (IMU), for mobile mapping. Further, as used herein, unless explicitly indicated otherwise, simultaneous localization and mapping (SLAM) is a technique/algorithm that a mobile 3D scanning system uses to incrementally build a map of the surrounding environment while the 3D scanning system is moving or has been moved, simultaneously localizing itself on the map. A "map" is a 2D or 3D representation of the environment seen through the various sensors of the 3D scanning system. The map is represented internally as a grid map. The grid map is a 2D or 3D arranged collection of cells representing an area of the environment. The grid map stores, for every cell, a probability indicating if the cell area is occupied or not based on the measurement(s) from the 3D scanning system. In some examples, the 3D scanning system can include lidar sensors which produce a 3D point cloud as output. Technical solutions are not restricted or limited to specific lidar sensors and can include lidar sensors from VELODYNE^{®}, OUSTER^{®}, or any other manufacturer.

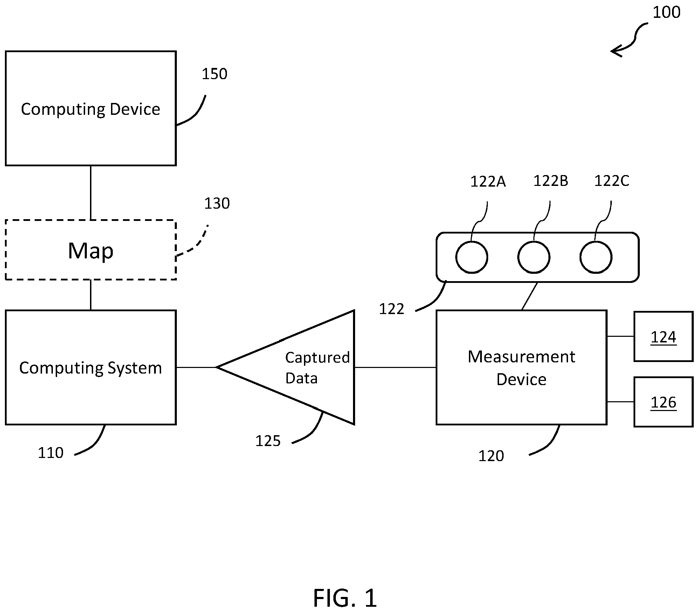

FIG. 1 depicts a scanning system for capturing measurements in an environment according to one or more aspects. The scanning system 100 includes a computing system 110 coupled with a measurement device 120. The coupling facilitates electronic communication of data and instructions between the computing system 110 and the measurement device 120. The communication can be performed in a wired or wireless manner. The measurement device 120 can be a 2D scanner, a 3D scanner, a camera, a drone-based camera, or any other measurement device or a combination thereof. The computing system 110 can be a computer server or any other type of computing device that facilitates remote storage and processing of the captured data 125.

The captured data 125 from the measurement device 120 includes measurements of a portion from the environment. The captured data 125 is transmitted to the computing system 110 for processing and/or storage. The computing device 110 can store the captured data 125 locally, i.e., in a storage device in the computing device 110 itself, or remotely, i.e., in a storage device that is part of another computing device 150. The computing device 150 can be a computer server or any other type of computing device that facilitates remote storage and processing of the captured data 125.

The captured data 125 from the measurement device 120 can include 2D images, 3D point clouds, a distance of each point in the point cloud(s) from the measurement device 120, color information at each point, radiance information at each point, and other such sensor data captured by the set of sensors 122 that is equipped on the measurement device 120. For example, sensors 122 can include a LIDAR 122A, a depth camera 122B, a camera 122C, etc. The 2D images can be panorama images (e.g., wide-angle images, ultra-wide-angle images, etc.) in some cases. The measurement device 120 can also include an inertial measurement unit (IMU) 126 to keep track of a pose, or at least an acceleration and a 3D orientation, of the measurement device 120. Alternatively, or in addition, for the captured data 125, the pose can be extrapolated by using the sensor data from sensors 122, the IMU 126, and/or from sensors besides the range finders.

In one or more aspects, the measurement device 120 can also include a global positioning sensor (GPS) (not shown) or another such location-sensing module that facilitates identifying a global position of the measurement device 120. While there are solutions that use photogrammetry using GPS information, for example, for scaling, such techniques have significant errors (~5-10%) because of the errors in the kinematic GPS measurement. While such techniques may be suitable for generating maps of large spaces (e.g., 5 square miles+) where the lower accuracy can be compensated, such errors are not acceptable when generating a map of a relatively smaller area, such as an office building, a factory, an industrial floor, a shopping mall, a construction site, and the like.

It should be noted that while only a single measurement device 120 is depicted, in some aspects, multiple measurement devices 120 can transmit respective captured data 125 to the computing system 110. In some examples, a first measurement device 120 is a 2D scanner, a second measurement device 120 is a 3D scanner, a third measurement device 120 is a camera, etc. Each of the measurement devices 120 transmits a captured data 125 to the computing system 110 concurrently in some aspects.

To address the technical challenges with existing 3D scanning systems and to facilitate capturing a map 130 of the surrounding in real-time using the mobile measurement device 120, aspects of the technical solutions described herein use distributed processing. The distributed processing comprises running a subset of the operations for generating the map 130 on the measurement devices 120 and another subset of the operations on the computing system 110 (i.e., cloud platform), which can process data from the different measurement devices 120. Accordingly, the technical challenge of the limited processing power available at the measurement devices 120 (for example, necessitated by the portability) can be overcome. Further, the distributed processing facilitates updating the computing system 110 (for example, to correct errors, add features, etc.) faster than updating the (local) measurement devices 120.

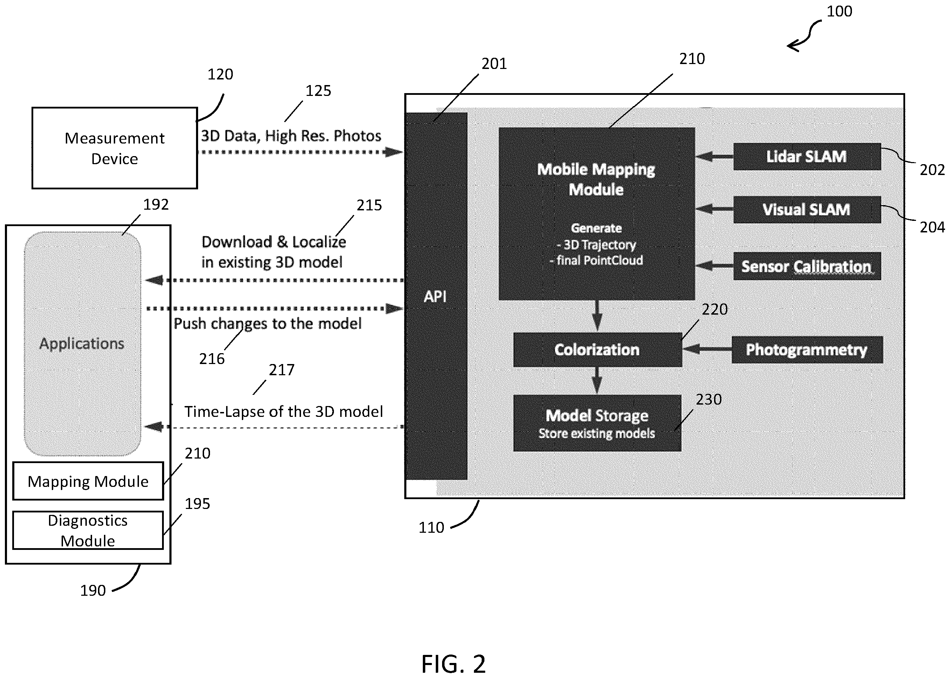

FIG. 2 depicts a block diagram of a structure of the distributed processing performed by the scanning system 100 to generate the map 130 according to one or more aspects. The measurement device 120 transmits the captured data 125 to the computing system 110, i.e., the "cloud." The computing system 110 processes the captured data 125 to generate an output 215. The output 215 includes at least a portion of the map 130.

In some aspects, one or more applications 192 receive the output 215. The one or more applications 190 can be software or computer programs in some aspects. The applications 192 may be executing on a computing device 190. The computing device 190 can be different from the computing system 110 in some aspects. For example, the computing device 190 can be a mobile phone, a tablet computer, a laptop computer, or any other type of portable computing device that may have limited computing resources. The computing device 190 communicates with the computing system 110 in a wired or wireless manner, for example, using a computer network, such as the Internet. In other aspects, the computing device 190 is the computing system 110 itself, or part of the computing system 110. In some examples, the computing device 190 can be the measurement device 120 itself, or associated with the measurement device 120.

The computing device 190, in some aspects, can transmit to the computing system 190, one or more requests 216 to change one or more portions of the map 130. The changes can be based on, for example, localization of a portion of the map 130 included in the output 215, resulting in misalignment. Alternatively, or in addition, the computing system 190 can provide a time-lapse 217 of a 3D model generated based on the captured data 125. For example, multiple scans of the surrounding are captured, and the differences are stored and made visible between two or more of the scans. This is a practical application to address a challenge during construction, for example, to visualize and document the progress during construction.

The computing system 110 can provide an application programming interface (API) 201 to facilitate communication with external components such as the measurement device 120 and the computing device 190. The API 201 can be accessed by the external components to provide the captured data 215, the requests 216, and to receive the output 215, the time-lapse of the 3D model 217, and other communications. Predetermined communication protocols and data structures are used to communicate the electronic data between the computing system 110 and the measurement device 120 and the computing device 190. For example, standards associated with the robot operating system (ROS) can be used for transferring the data using *.BAG file protocols. Other types of predetermined data standards can be used in other examples, and the data structures and protocols used for the communication do not limit the technical solutions described herein.

Based on the received inputs (e.g., captured data 125, requests 216, etc.) one or more components of the computing system 110 processes the captured data 125. It should be understood that while one possible division of the components of the computing system 110 is depicted, in other aspects of the technical solutions, the components can be structured any other way. The computing system 110 can include a mapping module 210 that generates a trajectory of the measurement device 120 in the map 130 based on the captured data 125. The mapping module 210 can also be responsible for generating a point cloud representing the surrounding environment. In some examples, the point cloud is part of the map 130.

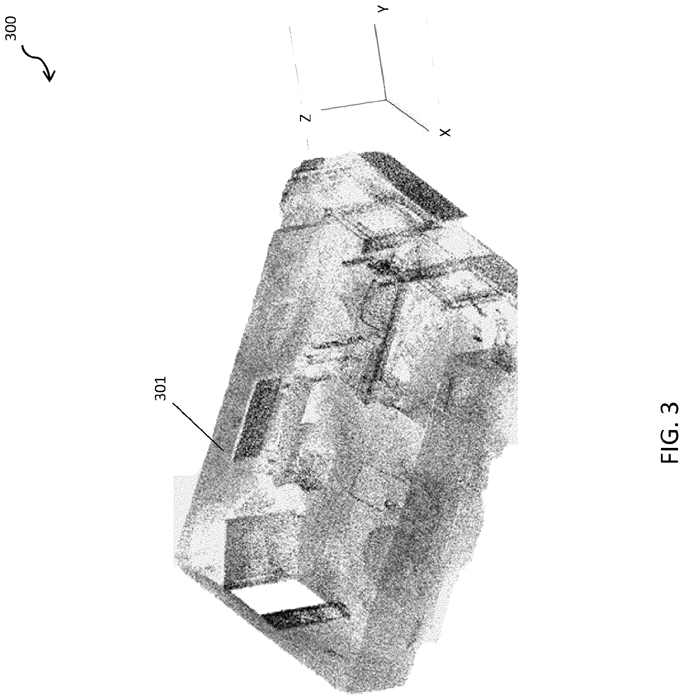

FIG. 3 depicts an example point cloud. A "point cloud" 300 is a collection of individual data points 301 in a 3D plane, with each data point 301 having a set coordinate on the X, Y, and Z-axis. A 3D model can be represented by rendering each of the data points 301 in the point cloud 300 together. For example, in the illustrated case, the data compiled to create the point cloud 300 is taken from a room to depict the location of each doors, windows, and/or any other objects (e.g., bed, rug, etc.) in the room. Depending on the data points 301 captured and the density of the point cloud 300, the clarity (or quality) of details and specific types of features and structures will vary.

Referring to FIG. 2, the mapping module 210 is responsible for executing one or more SLAM algorithms, such as lidar SLAM 202, visual SLAM 204, etc. The mapping module 210 uses the captured data 215. Further, the mapping module 210 uses information about the actual measurement device 120 that captured the data, i.e., which sensors were used, calibrations, etc. With such information, the mapping module 210 performs mapping for the different types of sensors 122, i.e., lidars, cameras, IMUs 126, etc. The "mapping" includes aligning the measurements from the several sensors into a homogenous coordinate system as well as ensuring timestamp synchronization across the sensors. The mapping module 210 generates a 3D point cloud 300 in this manner.

The computing system 110 further includes a colorization module 220, which in some aspects colorizes the 3D point cloud 300 that is generated by the mapping module 210. Colorization includes assigning a color to each data point 301 in the point cloud 300. The colorization can be performed using known techniques such as applying a "texture" using a color image captured by a camera. The color image can be a panoramic or fisheye image in one or more examples. The color image can be aligned with the 3D point cloud 300 using photogrammetry 222 in one or more examples. Other techniques can also be used to colorize the 3D point cloud 300 in other examples.

The 3D point cloud 300 with and/or without colorization is stored by the computing system 110 in a model storage 230.

The 3D point cloud 300 is provided to the computing device 190 as part of the output 215. In one or more examples, the computing device 190 also includes an instance of the mapping module 210. In some aspects, two different instances of the same mapping module 210 are executed, a first instance on the computing system 110, and a second instance on the computing device 190. The second instance has different (relaxed) settings from the first instance of the mapping module 210. The second instance performs a live mapping of the 3D point clouds in the output(s) 215 generated by the computing system 110. The second instance generates a preview of the map 130 using the outputs from the computing system 110. The generated preview can be a 2D or 2.5D map (2.5D means a 2D map with different floors/levels/stories). Alternatively, the preview visualizes the 3D point cloud 300 with a lower predetermined resolution.

Additionally, the computing device 190 includes a diagnostics and logging module 195 that saves information about the settings and calibration of the computing device 190.

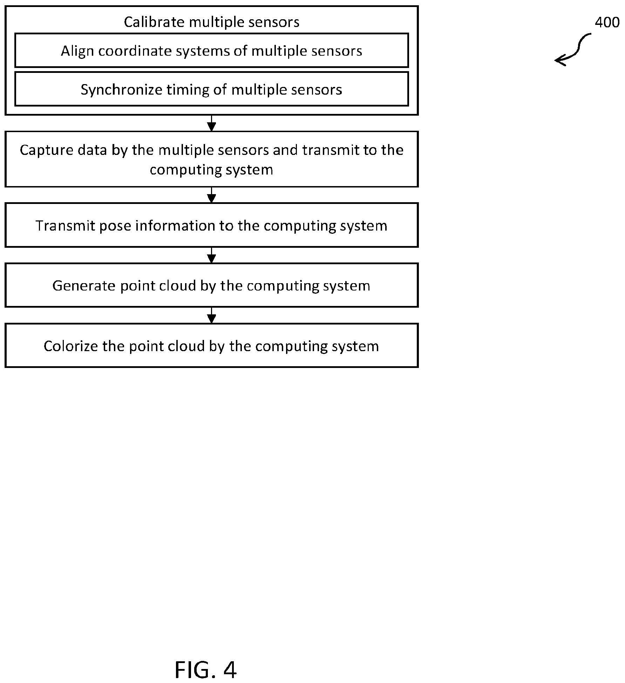

FIG. 4 depicts a flowchart of a method 400 for generating the map 130 of a surrounding environment as the measurement device 120 is transported in the surrounding environment and provides, as feedback, a real-time preview of the map 130 that is being generated according to one or more aspects. The method 400 includes, at block 402, calibrating the sensors 122 of the one or more measurement devices 120. At block 402A, the multiple sensors are calibrated to generate measurements on a single trajectory and a common coordinate system of a point cloud. When multiple sensors are used, the coordinate systems of the multiple sensors have to be aligned to a single coordinate system. For example, if the measurement device 120 includes two lidars, the measurements from both lidars have to be aligned to a common (single) coordinate system. The common coordinate system can be that of one of the two lidars or a third coordinate system independent of the two lidars.

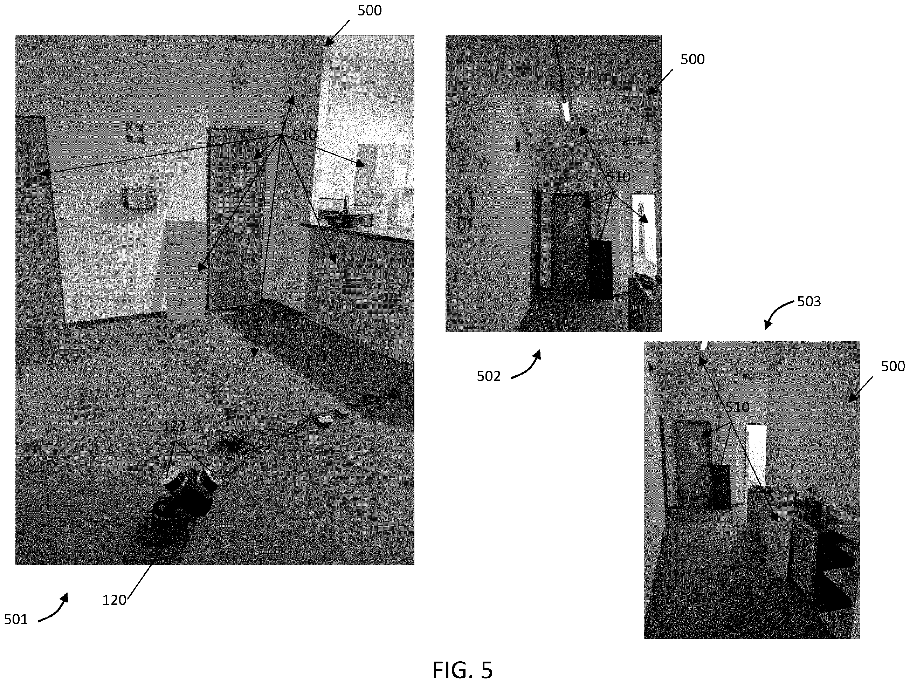

FIG. 5 depicts an example scenario of calibrating two lidar sensors. In the example scenario, a measurement device 120, in this case, a handheld TOF scanner, is placed in an environment 500, in this case, a room. The views 501, 502, 503 depict the measurement device 120 being placed at three different positions in the environment 500 to perform three calibrations. In other aspects, the number of calibrations can be different (fewer/more) than three.

The measurement device 120 has two lidars 522 in this case. The goal is to calibrate the two lidars 522 to generate a fused point cloud data (based on data captured by the two lidars 522) before calculating a trajectory. The fusion/fusing of the point cloud data facilitates obtaining a larger FOV (compared to a single lidar). It is understood that although only two lidars 522 are being calibrated in the depicted example, the technical solutions can be used to calibrate several sensors as described herein. Also, it is understood that while VELODYNE^{®} lidars 522 are depicted, the technical solutions described herein can be used for lidars from other manufacturers and are not limited to specific lidars. The calibration of the two lidars facilitates aligning the coordinate systems of the two lidars 522.

The position of the measurement device 120 for the calibrating in the views 501, 502, 503 facilitates placing multiple planes 510 in the field of view of both lidars 522. These planes 510 have to be linearly independent to facilitate determining a 6DOF pose of the planes 510 inside the coordinate systems of both lidars 522. The planes 510 can include any type of plane that can be detected by the sensors, and in this case, the planes 510 include floors, walls, windows, doors, furniture, or any other objects/items that can be detected by the lidars 522.

The planes 510 that are extracted from the data captured by the measurement device in this calibration position. The extraction can be done either manually or automatically. Plane extraction can be done using computer vision algorithms such as hierarchical plane extraction or the like. The same planes from the two separate data capture from the two lidars 522 at each calibration position are fitted to each other using known plane fitting techniques. The transformation that has to be applied to fit a first instance of a plane (e.g., a door) that is captured by the first lidar 522 to a second instance of the same plane (i.e., the door) that is captured by the second lidar 522 is used as the calibration transformation for the two lidars. When there are multiple planes (as in the example), the transformation that fits all of the planes from the two captured datasets is determined and used as the calibration transformation. The optimization problem can be formulated as finding a transformation T such as: All planes from one Lidar L1 transformed by the transformation T are on the same corresponding plane from the other Lidar L2.

To reduce the effect of inaccurate calibrations, especially when the planes are at distances beyond a predetermined threshold (e.g., 20 feet, 30 feet, etc.), only the vertical sensor (pointing to the ceiling in the depicted example) for the final point cloud generation. This improves the quality of the captured data because the horizontal sensor (pointing to the walls in the depicted example) can capture walls and other items multiple times and may lead to the accumulation of error(s).

Referring to the flowchart in FIG. 4, calibrating the sensors further includes, at block 402B, synchronizing timing across the multiple sensors 122. Timestamping the captured data from the sensors is crucial for the quality of the mapping. If the timestamps of the sensors are different in relation to each other, the processing places the captured data at positions away from each other. Software-based timestamping of the incoming data is inaccurate and can also depend on the amount of data being processed by the measurement device 120 (system load). To address this technical challenge of synchronizing the sensors, a precision clock synchronization protocol is used for networked measurement and control. In an example protocol, the clocks of two lidars 522 are synchronized to a grandmaster clock (third independent clock). The protocol supports system-wide synchronization accuracy in the sub-microsecond range with minimal network and local clock computing resources. Other types of timing synchronization can be implemented in other examples.

At block 404, sensor measurements of the surrounding environment are captured by the measurement devices 120 and transmitted to the computing system 110. The measured sensor data is the captured data 125. The sensors usually run at 20 Hz and produce a complete point cloud per sweep. This leads to a large amount of data per sweep. The data has to be transmitted to the computing system 110 for further processing. If the data is too large (multiple megabytes), data transfer can limit the speed at which the map 130 is generated. Accordingly, to address the technical challenge of the amount of data being generated by the sensors, technical solutions described herein only record the raw data of the lidar, which does not contain a 3D point measurement but only distance and angle information. This reduces the amount of data by a factor ~5. Furthermore, to reduce the transfer time of the data to the computing system 110 an external storage device (not shown) is plugged into the measurement device 120 where the captured data is stored. In some aspects, for transferring the captured data to the computing system, the external storage is plugged and read into the computing system 110. Alternatively, or in addition, the data that is stored in the external storage is uploaded to the computing system 110 via WIFI^{®}, 4G/5G, or any other type of communication network.

At block 406, the measurement device 120 transmits the pose information of the measurement device 120 to the computing system. At block 408, the mapping module 210 of the computing system 120 performs mapping to generate the 3D point cloud 300 of the surrounding using the captured data 125, calibration data, and pose information, based on one or more SLAM algorithms. Further, at block 410, the 3D point cloud 300 may be colorized.

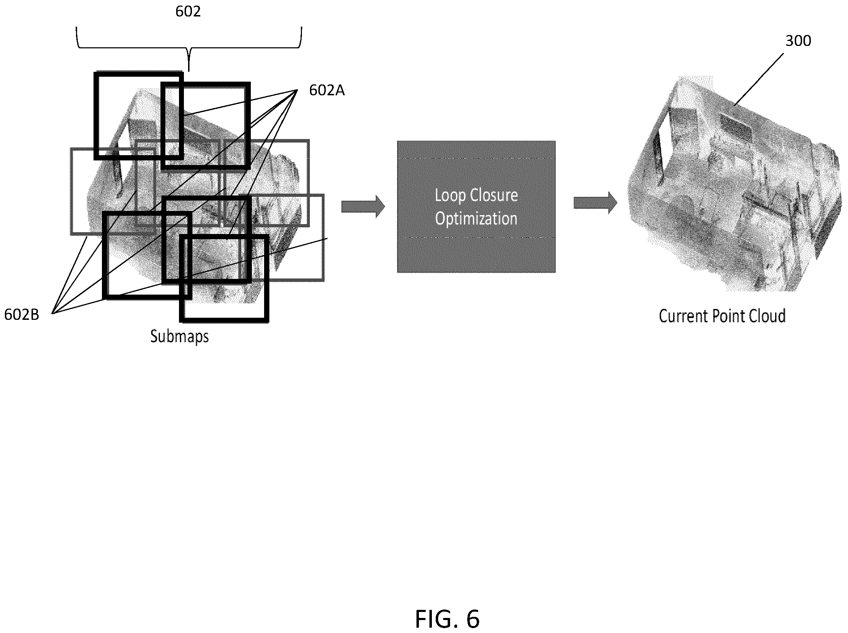

FIG. 6 depicts point cloud generation according to one or more aspects of the technical solutions described herein. In the point cloud generation in FIG. 6, the mapping module 210 uses the graph SLAM algorithm in which the recorded and registered point clouds generated by the lidars 522 are grouped together in submaps 602. The submaps 602 can be freely moved by the SLAM algorithm in the process of global optimization to find loop closures and reduce the systematic drift over time. For every single timepoint, the point cloud 300 can be generated by merging all of the submap point clouds 602 together. The submaps 602 represent the captured data 125 that is received from the measurement device 120, i.e., the lidars 522, over time. The submaps 602 can include a first subset of submaps (e.g., submaps 602A) received from the first lidar and a second subset of submaps (e.g., submaps 602B) received from the second lidar.

The 3D point cloud 300 is stored into the model storage 230, at block 412. The storage can include updating the map 300 of the surrounding environment 500 that is stored in the model storage 230 by appending the 3D point cloud 300 in the stored map 300.

As noted, the technical solutions herein further provide user confidence that areas s/he is mapping lead to a usable point cloud by providing real-time feedback and preview of the map 300 that is being generated by the computing system 110. Existing scanning systems may not give any feedback during scanning, and after all the processing is completed, users can notice parts of the point cloud that are misaligned. This can cause the user to capture all or at least a portion of the data again, which can be resource and time-intensive. In some cases, the user may have already left the premises of the environment that was to be captured, making the corrections even more challenging. Further, rendering a full 3D point cloud 300 for display is computationally intensive and unintuitive for many user workflows (e.g., navigation in a point cloud on a mobile touch device is not user-friendly).

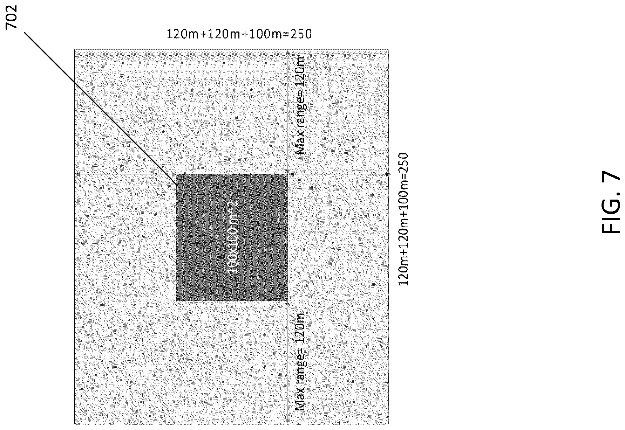

Accordingly, at block 414, a 2D visualization is generated for providing "live" (i.e., real-time) feedback that is responsive as the user moves the measurement device 122 in the surrounding environment. The 2D visualization is generated by the computing system 110 and output to the computing device 190 in some aspects. For the generation of the live feedback, the submaps 602 are used to project a representation of the point cloud 300 onto a 2D plane, resulting in a 2D image that can be shown for the 2D visualization. The 2D image that is generated can be large. FIG. 7 depicts a 2D image 702 that is generated by the projection according to one or more examples. In the example, consider mapping an outdoor area with a lidar range set to 120m. In such a case, the measurement device 120 generates the map 130 with a resolution of 5cm per grid. Accordingly, for a 10000m² area that is scanned by the measurement device 120, the 2D image 702 that is projected can have a size of up to (100m+240m)^{∗}20cells/m ^{∗} (100m+240m)x^{∗}20cells/m = 6800pixels x 6800pixels = 46.24 mega pixel). Providing live feedback in real-time when generating the 2D image 702 can be technically challenging for that size. Hence, in one or more aspects, the 2D projected map is periodically split to generate map tiles.

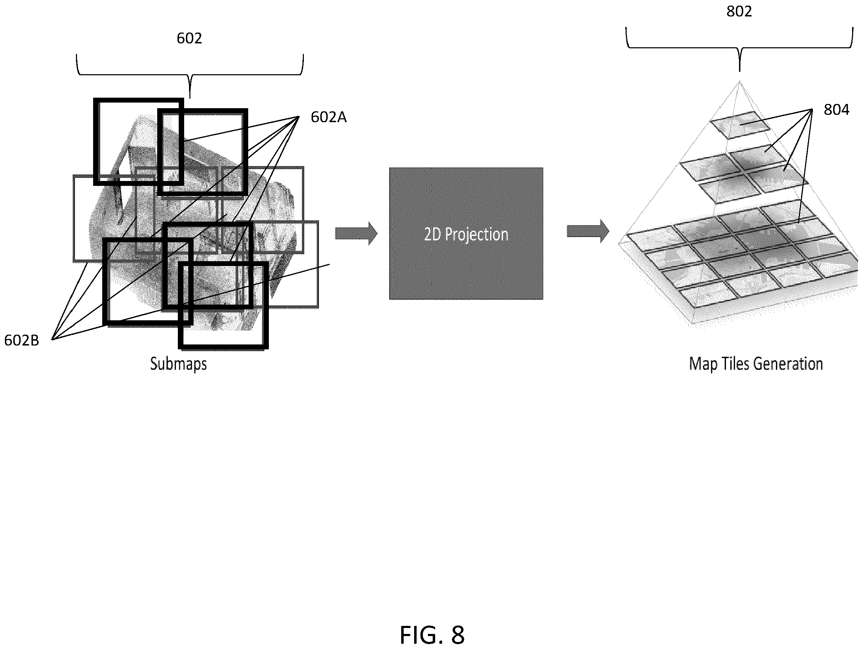

FIG. 8 depicts generating map tiles corresponding to the map 130 according to one or more aspects of the technical solutions herein. The map tiles provide a lower resolution 2D image 802 that is divided into smaller parts called tiles 804. Depending on the zoom level on the computing device 190, the corresponding map tile level is displayed. For example, on a highest zoom level the computer device 190 displays the lowest resolution map tiles (i.e., least detail). Once the operator zooms into a certain area of the map 130, only map tiles 804 covering that certain area are visualized. This allows a user to see the overall captured environment and also if desired, see the details of specific areas by zooming into the specific areas to be inspected. Map tiles 804 are used in combination with a point cloud 300 that can be composed of billion(s) of data points 301 to facilitate a real-time view of the 2D projection of the point cloud 300. Map tiles 804 are generated using known techniques for visualizing large 2D datasets.

The low latency in the visualization to facilitate the real-time view can be achieved by caching the 2D image 702. In some aspects, once the map tiles are generated, the user can immediately navigate/zoom in on the overall 2D map 702. Further, if a submap 602 moves in the process of loop closure or if a new submap 602 is added, the 2D image 702 is updated in response. Only the parts of the cached 2D image that belong to the submaps 602 that was moved (in the process of loop closure) or were newly added are updated. Accordingly, the update uses fewer resources than required for updating the entire 2D image 702. Accordingly, the time required for the update is reduced, facilitating real-time feedback.

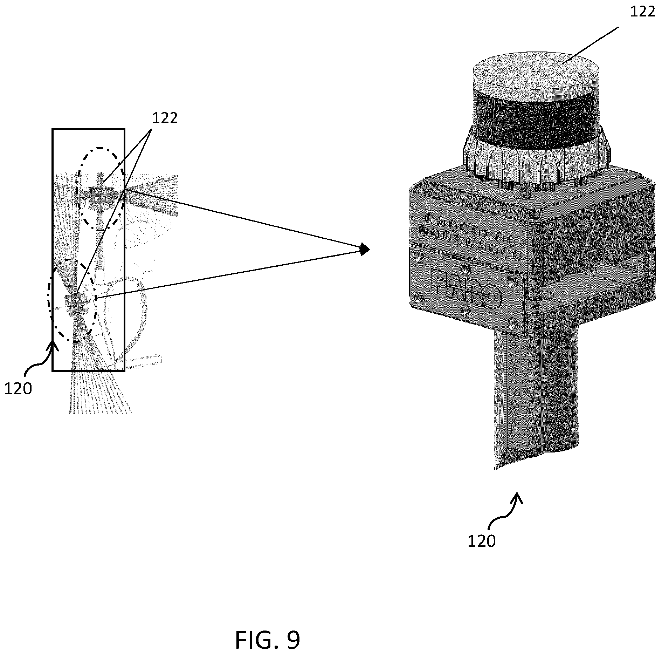

FIG. 9 depicts an example measurement device according to one or more aspects. The measurement device 120 depicted in this illustration includes two or more puck-shaped lidar sensors, such as those manufactured by VELODYNE^{™}. It is understood that other lidars can also be used in other examples. The measurement device 120 includes at least two sensors 122. It is understood that in other examples, the two sensors 122 can be mounted differently from what is shown in the illustration. For example, in some aspects, one of the sensors 122 in the illustration may be handheld by an operator, with another sensor 122 mounted on the operator's back. In some aspects, a moveable platform can be loaded with two (or more) of the sensors 122. The moveable platform is transported to capture the surroundings, for example, in an automated, semi-automated, or manual manner.

The sensors 122 are coupled to one or more electronics modules described herein. The electronics modules facilitate recording measurements from the sensors 122 and communicating with the computing system 110 as described herein. The sensors 122 can be coupled with the electronics modules in a wired or wireless manner. The electronics modules can be part of the measurement device 120, the computing system 110, the computing device 150, or stand-along components (not shown).

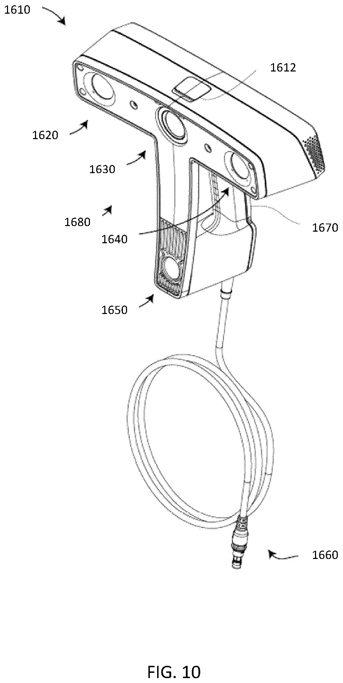

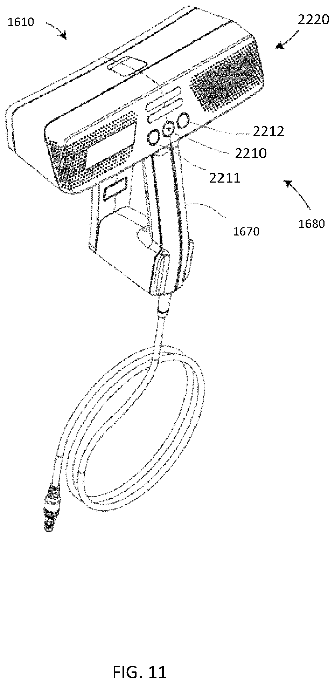

FIGS. 10, 11, 12A, and 12B depict a handheld 3D imager according to one or more aspects. FIG. 10 is a front isometric view of a handheld 3D triangulation scanner 1610, also referred to as a handheld 3D imager. In an aspect, the scanner 1610 includes a first infrared (IR) camera 1620, a second IR camera 1640, a registration camera 1630, a projector 1650, an Ethernet cable 1660, and a handle 1670. In an aspect, the registration camera 1630 is a color camera. Ethernet is a family of computer networking technologies standardized under IEEE 802.3. The enclosure 1680 includes the outmost enclosing elements of the scanner 1610, as explained in more detail herein below. FIG. 11 is a rear perspective view of the scanner 1610 further showing an exemplary perforated rear cover 2220, and a scan start/stop button 2210. In an aspect, buttons 2211, 2212 may be programmed to perform functions according to the instructions of a computer program, the computer program either stored internally within the scanner 1610 or externally in an external computer. In an aspect, each of the buttons 2210, 2211, 2212 includes at its periphery a ring illuminated by a light-emitting diode (LED).

In an aspect, the scanner 1610 of FIG. 10 is the scanner described in commonly owned United States Patent Application Serial No. 16/806,548 filed on March 2, 2020, the contents of which are incorporated by reference herein in its entirety.

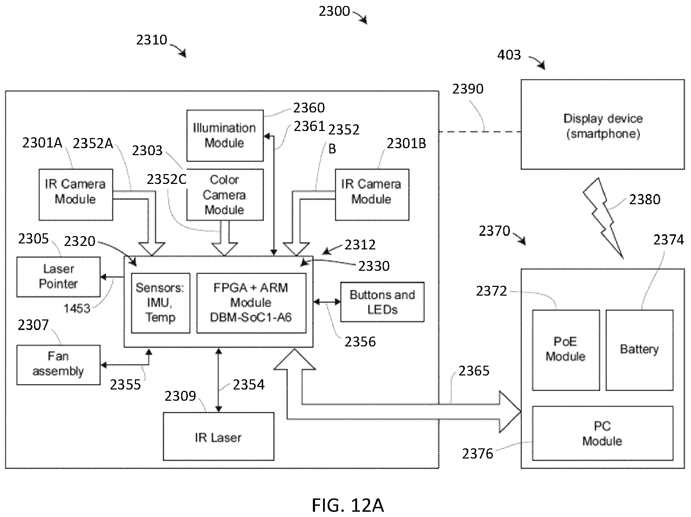

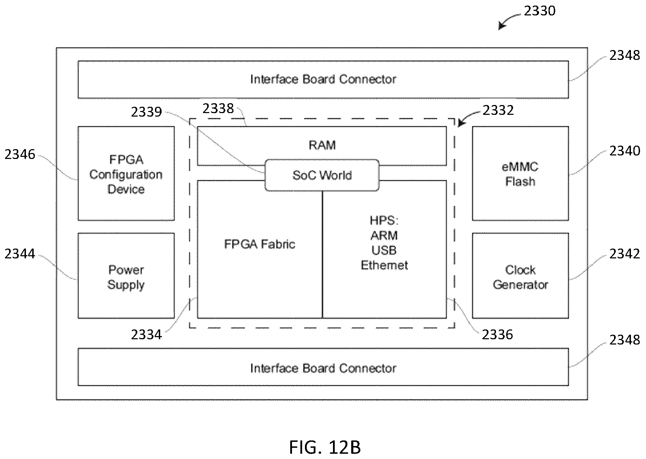

FIG. 12A is a block diagram of system electronics 2300 that, in an aspect, is included in the scanner system 10. In an aspect, the electronics 2300 includes electronics 2310 within the handheld scanner 1610, electronics 2370 within the computing device 110, electronics within the mobile computing device 403, electronics within other electronic devices such as accessories that attach to an accessory interface (not shown), and electronics such as external computers that cooperate with the scanner system electronics 2300. In an aspect, the electronics 2310 includes a circuit baseboard 2312 that includes a sensor collection 2320 and a computing module 2330, which is further shown in FIG. 12B. In an aspect, the sensor collection 2320 includes an IMU and one or more temperature sensors. In an aspect, the computing module 2330 includes a system-on-a-chip (SoC) field programmable gate array (FPGA) 2332. In an aspect, the SoC FPGA 2332 is a Cyclone V SoC FPGA that includes dual 800 MHz Cortex A9 cores, which are Advanced RISC Machine (ARM) devices. The Cyclone V SoC FPGA is manufactured by Intel Corporation, with headquarters in Santa Clara, California. FIG. 12B represents the SoC FPGA 2332 in block diagram form as including FPGA fabric 2334, a Hard Processor System (HPS) 2336, and random access memory (RAM) 2338 tied together in the SoC 2339. In an aspect, the HPS 2336 provides peripheral functions such as Gigabit Ethernet and USB. In an aspect, the computing module 2330 further includes an embedded MultiMedia Card (eMMC) 2340 having flash memory, a clock generator 2342, a power supply 2344, an FPGA configuration device 2346, and interface board connectors 2348 for electrical communication with the rest of the system.

Signals from the infrared (IR) cameras 2301A, 2301B, and the registration camera 2303 are fed from camera boards through cables to the circuit baseboard 2312. Image signals 2352A, 2352B, 2352C from the cables are processed by the computing module 2330. In an aspect, the computing module 2330 provides a signal 2353 that initiates the emission of light from the laser pointer 2305. A TE control circuit communicates with the TE cooler within the infrared laser 2309 through a bidirectional signal line 2354. In an aspect, the TE control circuit is included within the SoC FPGA 2332. In another aspect, the TE control circuit is a separate circuit on the baseboard 2312. A control line 2355 sends a signal to the fan assembly 2307 to set the speed of the fans. In an aspect, the controlled speed is based at least in part on the temperature as measured by temperature sensors within the sensor unit 2320. In an aspect, the baseboard 2312 receives and sends signals to buttons 2210, 2211, 2212 and their LEDs through the signal line 2356. In an aspect, the baseboard 2312 sends over a line 2361 a signal to an illumination module 2360 that causes white light from the LEDs to be turned on or off.

In an aspect, bidirectional communication between the electronics 2310 and the electronics 2370 is enabled by Ethernet communications link 2365. In an aspect, the Ethernet link is provided by the cable 1660. In an aspect, the cable 1660 attaches to the mobile PC 401 through the connector on the bottom of the handle. The Ethernet communications link 2365 is further operable to provide or transfer power to the electronics 2310 through the user of a custom Power over Ethernet (PoE) module 2372 coupled to the battery 2374. In an aspect, the mobile PC 2370 further includes a PC module 2376, which in an aspect is an Intel^{®} Next Unit of Computing (NUC) processor. The NUC is manufactured by Intel Corporation, with headquarters in Santa Clara, California. In an aspect, the mobile PC 2370 is configured to be portable, such as by attaching to a belt and carried around the waist or shoulder of an operator.

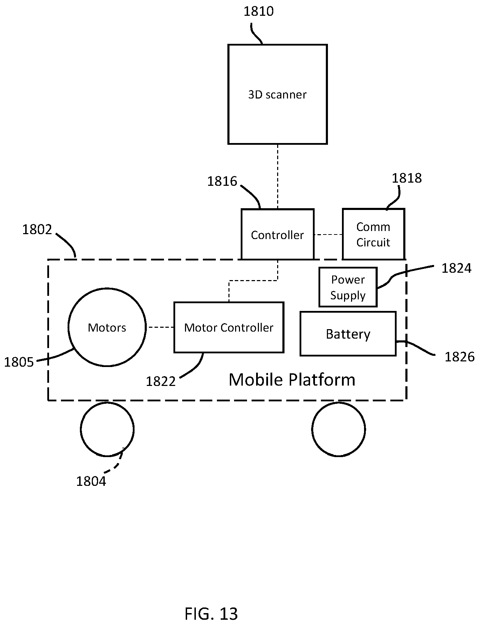

Referring now to FIG. 13, an aspect is shown of a mobile scanning platform 1800. The mobile scanning platform 1800 can be used as the scanning system 100. The mobile scanning platform 1800 includes a base unit 1802 having a plurality of wheels 1804. The wheels 1804 are rotated by motors 1805. The mobile scanning platform 1800 further includes a 3D scanner 1810, i.e., the a measurement device 120. In an aspect, the 3D scanner 1810 is a time-of-flight (TOF) laser scanner such as that shown and described herein. The scanner 1810 may be that described in commonly owned United States Patent No. 8,705,012, which is incorporated by reference herein.

In an aspect, the mobile scanning platform 1800 further includes a controller 1816. The controller 1816 is a computing device having one or more processors and memory. The one or more processors are responsive to non-transitory executable computer instructions for performing operational methods such as those described herein. The processors may be microprocessors, field programmable gate arrays (FPGAs), digital signal processors (DSPs), and generally any device capable of performing computing functions. The one or more processors have access to memory for storing information.

Coupled for communication to the controller 1816 is a communications circuit 1818 and an input/output hub 1820. In the illustrated aspect, the communications circuit 1818 is configured to transmit and receive data via a wireless radio-frequency communications medium, such as WIFI or Bluetooth for example. In an aspect, the communications circuit 1818 facilitates communication with the computing system 110.

In an aspect, the mobile scanning platform 1800 further includes a motor controller 1822 that is operably coupled to the control the motors 1805. In an aspect, the motor controller 1822 is mounted to an external surface of the base unit 1802. In another aspect, the motor controller 1822 is arranged internally within the base unit 1802. The mobile scanning platform 1800 further includes a power supply 1824 that controls the flow of electrical power from a power source, such as batteries 1826 for example. The batteries 1826 may be disposed within the interior of the base unit 1802. In an aspect, the base unit 1802 includes a port (not shown) for coupling the power supply to an external power source for recharging the batteries 1826. In another aspect, the batteries 1826 are removable or replaceable.

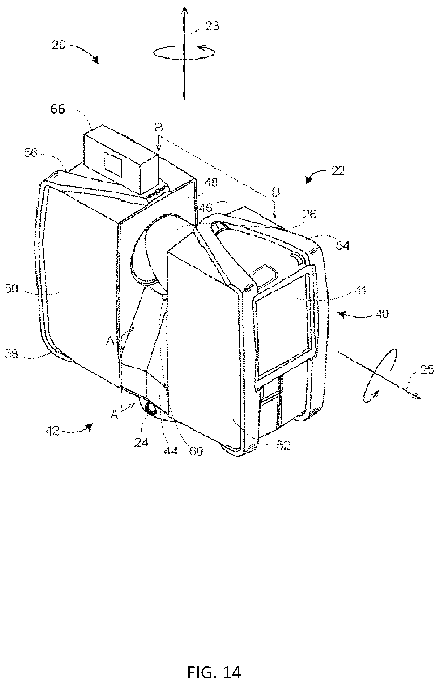

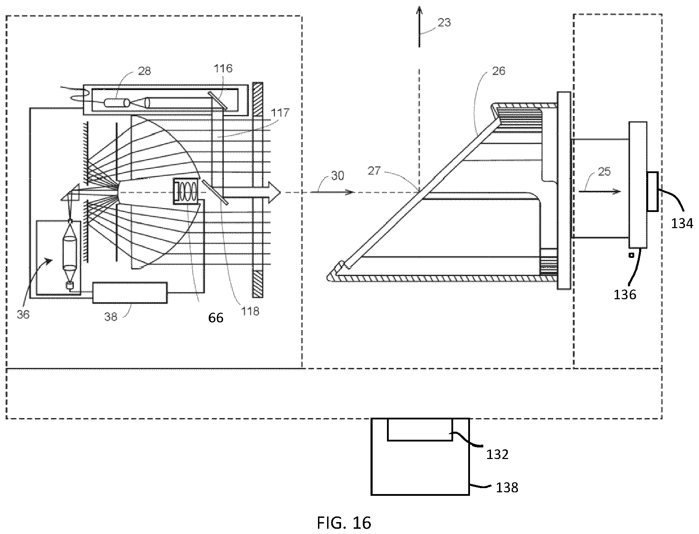

Referring now to FIGS. 14 - 16, a laser scanner 20 is shown for optically scanning and measuring the environment surrounding the laser scanner 20. The laser scanner 20 has a measuring head 22 and a base 24. The measuring head 22 is mounted on the base 24 such that the laser scanner 20 may be rotated about a vertical axis 23. In one aspect, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one aspect, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

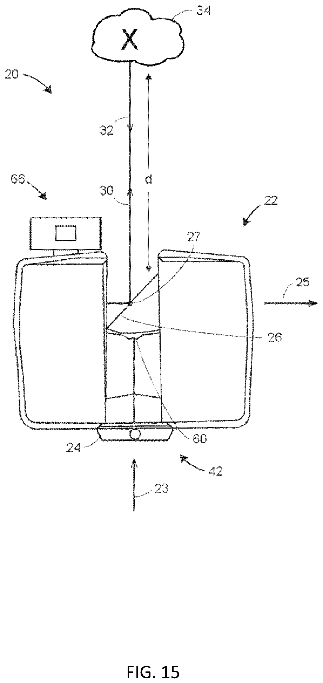

Coupled to the light emitter 28 and the light receiver 36 is a controller 38. The controller 38 determines, for a multitude of measuring points X (FIG. 15), a corresponding number of distances d between the laser scanner 20 and the points X on object 34. The distance to a particular point X is determined based at least in part on the speed of light in air through which electromagnetic radiation propagates from the device to the object point X. In one aspect the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction n of the air. The speed of light in air is equal to the speed of light in vacuum c divided by the index of refraction. In other words, *c*ₐᵢᵣ = *c* / *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, method of triangulation enables the distance to the object to be determined based on one known length and two known angles of a triangle. Method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary aspect, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the scanner 20 may also collect gray-scale information related to the received intensity (equivalent to the term "brightness" or "optical power") value. The gray-scale value may be determined at least in part, for example, by integration of the bandpass-filtered and amplified signal in the light receiver 36 over a measuring period attributed to the object point X. As will be discussed in more detail herein, the intensity value may be used to enhance color images that are used to colorize the scanned data.

The measuring head 22 may include a display device 40 integrated into the laser scanner 20. The display device 40 may include a graphical touch screen 41, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one aspect, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary aspect, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary aspect, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary aspect, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other aspects, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary aspect, the prism 60 is integrally formed as part of the carrying structure 42. In other aspects, the prism 60 is a separate component that is coupled to the traverse 44. When the mirror 26 rotates, during each rotation the mirror 26 directs the emitted light beam 30 onto the traverse 44 and the prism 60. Due to non-linearities in the electronic components, for example in the light receiver 36, the measured distances d may depend on signal strength, which may be measured in optical power entering the scanner or optical power entering optical detectors within the light receiver 36, for example. In an aspect, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary aspect, the resulting correction of distance is performed by the controller 38.

In an aspect, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an aspect, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an aspect, the auxiliary image acquisition device 66 is a color camera with an ultrawide-angle lens, sometimes referred to as a "fisheye camera."

In an aspect, the camera 66 is located internally to the scanner and may have the same optical axis as the 3D scanner device. In this aspect, the camera 66 is integrated into the measuring head 22 and arranged to acquire images along the same optical pathway as emitted light beam 30 and reflected light beam 32. In this aspect, the light from the light emitter 28 reflects off a fixed mirror 116 and travels to dichroic beam-splitter 118 that reflects the light 117 from the light emitter 28 onto the rotary mirror 26. In an aspect, the mirror 26 is rotated by a motor 136 and the angular/rotational position of the mirror is measured by angular encoder 134. The dichroic beam-splitter 118 allows light to pass through at wavelengths different than the wavelength of light 117. For example, the light emitter 28 may be a near infrared laser light (for example, light at wavelengths of 780 nm or 1150 nm), with the dichroic beam-splitter 118 configured to reflect the infrared laser light while allowing visible light (e.g., wavelengths of 400 to 700 nm) to transmit through. In other aspects, the determination of whether the light passes through the beam-splitter 118 or is reflected depends on the polarization of the light. The camera 66 obtains 2D images of the scanned area to capture color data to add to the captured point cloud. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

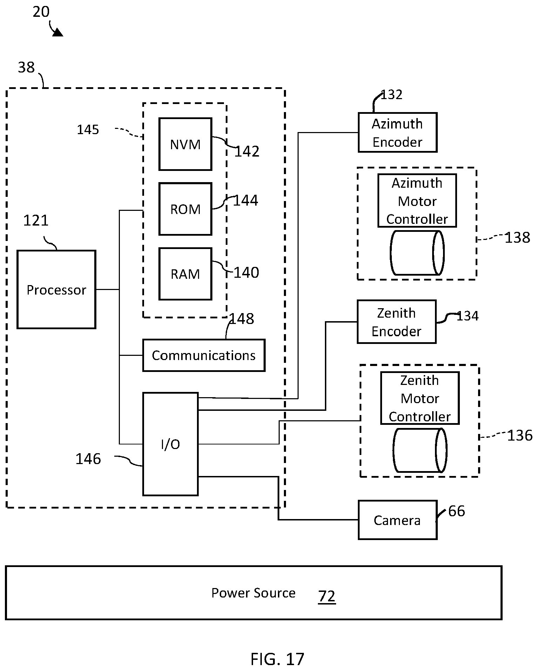

Referring now to FIG. 17 with continuing reference to FIGS. 14-16, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 121 have access to memory 125 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by panoramic camera 66, angular/rotational measurements by a first or azimuth encoder 132, and angular/rotational measurements by a second axis or zenith encoder 134.

In general, controller 38 accepts data from encoders 132, 134, light receiver 36, light source 28, and panoramic camera 66 and is given certain instructions for the purpose of generating a 3D point cloud of a scanned environment. Controller 38 provides operating signals to the light source 28, light receiver 36, panoramic camera 66, zenith motor 136 and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touchscreen display or the like. A keypad may also be coupled to the user interface for providing data input to controller 38. In one aspect, the user interface is arranged or executed on a mobile computing device that is coupled for communication, such as via a wired or wireless communications medium (e.g. Ethernet, serial, USB, Bluetooth^{™} or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 121 are coupled to memory 125. The memory 125 may include random access memory (RAM) device 140, a non-volatile memory (NVM) device 142, and a read-only memory (ROM) device 144. In addition, the processors 121 may be connected to one or more input/output (I/O) controllers 146 and a communications circuit 148. In an aspect, the communications circuit 92 provides an interface that allows wireless or wired communication with one or more external devices or networks, such as the LAN discussed above.

Controller 38 includes operation control methods described herein, which can be embodied in application code. For example, these methods are embodied in computer instructions written to be executed by processors 121, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (Hypertext Markup Language), Python, Ruby and any combination or derivative of at least one of the foregoing.

It should be appreciated that the examples of measurement devices depicted herein can further be attached an external camera to capture the identity images 310, in addition to any of the cameras that are already associated with the measurement devices.

Terms such as processor, controller, computer, DSP, FPGA are understood in this document to mean a computing device that may be located within an instrument, distributed in multiple elements throughout an instrument, or placed external to an instrument.

In one or more aspects, the captured data 125 can be used to generate a map 130 of the environment in which the measurement device 120 is being moved. The computing device 110 and/or the computing device 150 can generate map 130. Map 130 can be generated by combining several instances of the captured data 125, for example, submaps. Each submap can be generated using SLAM, which includes generating one or more submaps corresponding to one or more portions of the environment. The submaps are generated using the one or more sets of measurements from the sets of sensors 122. The submaps are further combined by the SLAM algorithm to generate map 130.

It should be noted that a "submap" is a representation of a portion of the environment and that map 130 of the environment includes several such submaps "stitched" together. Stitching the maps together includes determining one or more landmarks on each submap that is captured and aligning and registering the submaps with each other to generate map 130. In turn, generating each submap includes combining or stitching one or more sets of captured data 125 from the measurement device 120. Combining two or more captured data 125 requires matching, or registering one or more landmarks in the captured data 125 being combined.

Here, a "landmark" is a feature that can be detected in the captured data 125, and which can be used to register a point from a first captured data 125 with a point from a second captured data 125 being combined. For example, the landmark can facilitate registering a 3D point cloud with another 3D point cloud or to register an image with another image. Here, the registration can be done by detecting the same landmark in the two captured data 125 (images, point clouds, etc.) that are to be registered with each other. A landmark can include but is not limited to features such as a doorknob, a door, a lamp, a fire extinguisher, or any other such identification mark that is not moved during the scanning of the environment. The landmarks can also include stairs, windows, decorative items (e.g., plant, picture-frame, etc.), furniture, or any other such structural or stationary objects. In addition to such "naturally" occurring features, i.e., features that are already present in the environment being scanned, landmarks can also include "artificial" landmarks that are added by the operator of the measurement device 120. Such artificial landmarks can include identification marks that can be reliably captured and used by the measurement device 120. Examples of artificial landmarks can include predetermined markers, such as labels of known dimensions and patterns, e.g., a checkerboard pattern, a target sign, spheres, or other such preconfigured markers.

In the case of some of the measurement devices 120, such as a volume scanner, the computing device 110, 150 can implement SLAM while building the scan to prevent the measurement device 120 from losing track of where it is by virtue of its motion uncertainty because there is no presence of an existing map of the environment (the map is being generated simultaneously). It should be noted that in the case of some types of measurement devices 120, SLAM is not performed. For example, in the case of a laser tracker 20, the captured data 125 from the measurement device 120 is stored without performing SLAM.

It should be noted that although description of implementing SLAM is provided, other uses of the captured data (2D images and 3D scans) are possible in other aspects of the technical solutions herein.

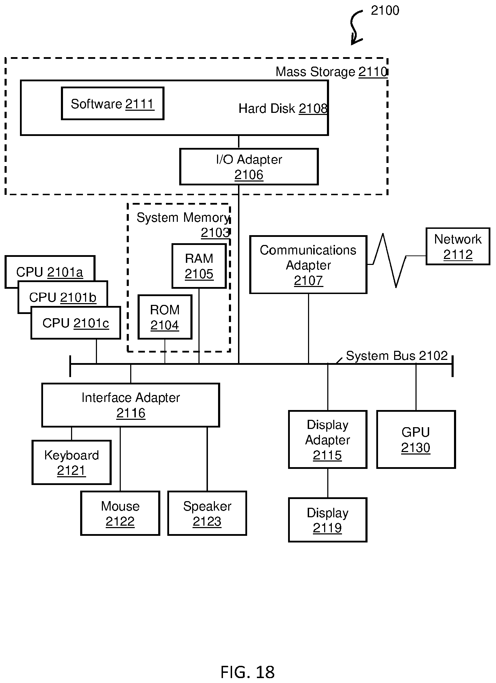

Turning now to FIG. 18, a computer system 2100 is generally shown in accordance with an aspect. The computer system 2100 can be used as the computing device 110 and/or the computing device 150. The computer system 2100 can be an electronic, computer framework comprising and/or employing any number and combination of computing devices and networks utilizing various communication technologies, as described herein. The computer system 2100 can be easily scalable, extensible, and modular, with the ability to change to different services or reconfigure some features independently of others. The computer system 2100 may be, for example, a server, desktop computer, laptop computer, tablet computer, or smartphone. In some examples, computer system 2100 may be a cloud computing node. Computer system 2100 may be described in the general context of computer system executable instructions, such as program modules, being executed by a computer system. Generally, program modules may include routines, programs, objects, components, logic, data structures, and so on that perform particular tasks or implement particular abstract data types. Computer system 2100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 18, the computer system 2100 has one or more central processing units (CPU(s)) 2101a, 2101b, 2101c, etc. (collectively or generically referred to as processor(s) 2101). The processors 2101 can be a single-core processor, multi-core processor, computing cluster, or any number of other configurations. The processors 2101, also referred to as processing circuits, are coupled via a system bus 2102 to a system memory 2103 and various other components. The system memory 2103 can include a read only memory (ROM) 2104 and a random access memory (RAM) 2105. The ROM 2104 is coupled to the system bus 2102 and may include a basic input/output system (BIOS), which controls certain basic functions of the computer system 2100. The RAM is read-write memory coupled to the system bus 2102 for use by the processors 2101. The system memory 2103 provides temporary memory space for operations of said instructions during operation. The system memory 2103 can include random access memory (RAM), read only memory, flash memory, or any other suitable memory systems.

The computer system 2100 comprises a graphics processing unit (GPU) 2130 that can include one or more processing cores and memory devices. The GPU can be used as a co-processor by the processors 2101 to perform one or more operations described herein.

The computer system 2100 comprises an input/output (I/O) adapter 2106 and a communications adapter 2107 coupled to the system bus 2102. The I/O adapter 2106 may be a small computer system interface (SCSI) adapter that communicates with a hard disk 2108 and/or any other similar component. The I/O adapter 2106 and the hard disk 2108 are collectively referred to herein as a mass storage 2110.

Software 2111 for execution on the computer system 2100 may be stored in the mass storage 2110. The mass storage 2110 is an example of a tangible storage medium readable by the processors 2101, where the software 2111 is stored as instructions for execution by the processors 2101 to cause the computer system 2100 to operate, such as is described herein below with respect to the various Figures. Examples of computer program product and the execution of such instruction is discussed herein in more detail. The communications adapter 2107 interconnects the system bus 2102 with a network 2112, which may be an outside network, enabling the computer system 2100 to communicate with other such systems. In one aspect, a portion of the system memory 2103 and the mass storage 2110 collectively store an operating system, which may be any appropriate operating system to coordinate the functions of the various components shown in FIG. 18.

Additional input/output devices are shown as connected to the system bus 2102 via a display adapter 2115 and an interface adapter 2116 and. In one aspect, the adapters 2106, 2107, 2115, and 2116 may be connected to one or more I/O buses that are connected to the system bus 2102 via an intermediate bus bridge (not shown). A display 2119 (e.g., a screen or a display monitor) is connected to the system bus 2102 by a display adapter 2115, which may include a graphics controller to improve the performance of graphics intensive applications and a video controller. A keyboard 2121, a mouse 2122, a speaker 2123, etc. can be interconnected to the system bus 2102 via the interface adapter 2116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI). Thus, as configured in FIG. 18, the computer system 2100 includes processing capability in the form of the processors 2101, and, storage capability including the system memory 2103 and the mass storage 2110, input means such as the keyboard 2121 and the mouse 2122, and output capability including the speaker 2123 and the display 2119.

In some aspects, the communications adapter 2107 can transmit data using any suitable interface or protocol, such as the internet small computer system interface, among others. The network 2112 may be a cellular network, a radio network, a wide area network (WAN), a local area network (LAN), or the Internet, among others. An external computing device may connect to the computer system 2100 through the network 2112. In some examples, an external computing device may be an external webserver or a cloud computing node.

It is to be understood that the block diagram of FIG. 18 is not intended to indicate that the computer system 2100 is to include all of the components shown in FIG. 14. Rather, the computer system 2100 can include any appropriate fewer or additional components not illustrated in FIG. 18 (e.g., additional memory components, embedded controllers, modules, additional network interfaces, etc.). Further, the aspects described herein with respect to computer system 2100 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various aspects.

It will be appreciated that aspects of the present disclosure may be embodied as a system, method, or computer program product and may take the form of a hardware aspect, a software aspect (including firmware, resident software, microcode, etc.), or a combination thereof. Furthermore, aspects of the present disclosure may take the form of a computer program product embodied in one or more computer-readable medium(s) having computer-readable program code embodied thereon. Methods herein can be computer-implemented methods.

One or more computer-readable medium(s) may be utilized. The computer-readable medium may be a computer-readable signal medium or a computer-readable storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In one aspect, the computer-readable storage medium may be a tangible medium containing or storing a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium, and that can communicate, propagate, or transport a program for use by or in connection with an instruction execution system, apparatus, or device.

The computer-readable medium may contain program code embodied thereon, which may be transmitted using any appropriate medium, including but not limited to wireless, wireline, optical fiber cable, RF, etc., or any suitable combination of the foregoing. In addition, computer program code for carrying out operations for implementing aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server.

It will be appreciated that aspects of the present disclosure are described herein with reference to flowchart illustrations and/or block diagrams of methods, apparatus (systems) and computer program products according to aspects. It will be understood that each block or step of the flowchart illustrations and/or block diagrams, and combinations of blocks or steps in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer, other programmable data processing apparatus, or other devices to function in a particular manner, such that the instructions stored in the computer-readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer-implemented process such that the instructions which execute on the computer or other programmable apparatus provide processes for implementing the functions/acts specified in the flowchart and/or block diagram block or blocks.

While the invention has been described in detail in connection with only a limited number of aspects, it should be readily understood that the invention is not limited to such disclosed aspects. Rather, the invention can be modified to incorporate any number of variations, alterations, substitutions or equivalent arrangements not heretofore described, but which are commensurate with the spirit and scope of the invention. Additionally, while various aspects of the invention have been described, it is to be understood that aspects of the invention may include only some of the described aspects. Accordingly, the invention is not to be seen as limited by the foregoing description but is only limited by the scope of the appended claims.

## Claims

1. A mobile three-dimensional (3D) measuring system, comprising:
a 3D measuring device comprising a first sensor and a second sensor;
a computing system coupled with the 3D measuring device; and
a computing device coupled with the computing system, wherein
the 3D measuring device continuously transmits a first captured data from the first sensor, and a second captured data from the second sensor to the computing system as the 3D measuring device is moved in an environment;
the computing system generates a 3D point cloud representing the environment based on the first captured data and the second captured data, and stores the 3D point cloud;
the computing system generates a 2D projection corresponding to the 3D point cloud based on the first captured data and the second captured data; and
the computing device displays the 2D projection as a live feedback of a movement of the 3D measuring device.

2. The system of claim 1, wherein the 3D measuring device is a laser scanner.

3. The system of claim 2, wherein the 3D measuring device is portable.

4. The system of claim 1, wherein the first sensor and the second sensor are from a group comprising a two-dimensional (2D) scanner, a 3D scanner that directs light in a horizontal plane, a 2D camera, a 3D depth camera, a lidar, and an ultrasound sensor.

5. The system of claim 1, wherein the 3D measuring device is further configured for wireless communication with the computing system.

6. The system of claim 1, wherein, the 2D projection is displayed at a first map tile level, and in response to zooming in to a portion of the 2D projection, a second map tile level is displayed.

7. The system of claim 1, wherein generating the 3D point cloud comprises transforming the first captured data and the second captured data according to a calibration mapping between a first coordinate system of the first sensor and a second coordinate system of the second sensor.

8. The system of claim 1, wherein generating the 3D point cloud comprises synchronizing timing of the first sensor and the second sensor.

9. A computer-implemented method comprising:
receiving, from a 3D measuring device comprising a sensor, a captured data from the sensor, the 3D measuring device capturing data from an environment;
generating a 3D point cloud representing the environment based on the captured data, and storing the 3D point cloud;
generating a 2D projection corresponding to the 3D point cloud based on the captured data; and
transmitting the 2D projection for display as live feedback of a movement of the 3D measuring device.

10. The computer-implemented method of claim 9, wherein the 2D projection is displayed as live feedback on the 3D measuring device, and/or a computing device.

11. The computer-implemented method of claim 9, wherein the sensor is from a group comprising a two-dimensional (2D) scanner, a 3D scanner that directs light in a horizontal plane, a 2D camera, a 3D depth camera, a LIDAR, and an ultrasound sensor.

12. The computer-implemented method of claim 9, wherein, the 2D projection is displayed at a first map tile level, and in response to zooming in to a portion of the 2D projection, a second map tile level is displayed.

13. The computer implemented method of of claim 9, wherein generating the 3D point cloud comprises transforming the first captured data and the second captured data according to a calibration mapping between a first coordinate system of the first sensor and a second coordinate system of the second sensor.

14. The computer implemented method of claim 9, wherein generating the 3D point cloud comprises synchronizing timing of the first sensor and the second sensor.

15. The computer implemented method of claim 9, wherein the 3D measuring device is a portable laser scanner.
